(19) Europäisches Patentamt
European Patent Office
Office européen des brevets

(11) **EP 4 415 347 B1**

(12) **EUROPEAN PATENT SPECIFICATION**

(45) Date of publication and mention
of the grant of the patent:
**25.03.2026 Bulletin 2026/13**

(21) Application number: **22897844.1**

(22) Date of filing: **23.11.2022**

(51) International Patent Classification (IPC):
**H04N 7/015** (2006.01)        **G06F 8/30** (2018.01)
**G06F 16/00** (2019.01)        **G06F 16/906** (2019.01)

(52) Cooperative Patent Classification (CPC):
**G06F 16/906; G06F 8/315; H04N 7/015**

(86) International application number:
**PCT/CN2022/133729**

(87) International publication number:
**WO 2023/093761 (01.06.2023 Gazette 2023/22)**

(54) **DATA PROCESSING METHOD AND RELATED APPARATUS**

DATENVERARBEITUNGSVERFAHREN UND ZUGEHÖRIGE VORRICHTUNG

PROCÉDÉ DE TRAITEMENT DE DONNÉES ET APPAREIL ASSOCIÉ

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **29.11.2021 RU 2021134789**

(43) Date of publication of application:
**14.08.2024 Bulletin 2024/33**

(73) Proprietor: **Huawei Cloud Computing
Technologies Co., Ltd.
Guizhou 550025 (CN)**

(72) Inventors:
• **WANG, Yawei**
**Guiyang, Guizhou 550025 (CN)**
• **SELEZNEV, Ilya**
**Guiyang, Guizhou 550025 (CN)**
• **PETROCHENKO, Pavel**
**Guiyang, Guizhou 550025 (CN)**
• **DENISENKO, Denis**
**Guiyang, Guizhou 550025 (CN)**

(74) Representative: **Pfenning, Meinig & Partner mbB
Patent- und Rechtsanwälte
Theresienhöhe 11a
80339 München (DE)**

(56) References cited:
CN-A- 102 799 583        CN-A- 106 919 370
CN-A- 109 815 242        CN-A- 111 581 267
US-A1- 2011 106 770

• **SPRINGER MATTHIAS: "Memory-Efficient
Object-Oriented Programming on GPUs", 16
August 2019 (2019-08-16), pages 1 - 227,
XP093233321, Retrieved from the Internet
<URL:https://arxiv.org/pdf/1908.05845>
[retrieved on 20241211]**
• **KRETZ MATTHIAS: "Extending C++ for Explicit
Data-Parallel Programming via SIMD Vector
Types", 1 October 2015 (2015-10-01), pages 1 -
256, XP093233319, Retrieved from the Internet
<URL:https://publikationen.ub.unifrankfurt.de/
opus4/frontdoor/deliver/index/docId/38415/file/
Matthias_Kretz_-_Extending_C+
+_for_Explicit_Data-
Parallel_Programming_via_SIMD_Vector_Types.
pdf>** [retrieved on 20241211]
• **WEBER NICOLAS ET AL: "Auto-Tuning Complex
Array Layouts for GPUs", EUROGRAPHICS
SYMPOSIUM ON PARALLEL GRAPHICS AND
VISUALIZATION, 10 June 2014 (2014-06-10),
pages 1 - 8, XP093233315, Retrieved from the
Internet <URL:https://download.hrz.
tu-darmstadt.de/pub/FB20/GCC/paper/
Weber_2014_EGPGV.pdf> [retrieved on
20241211]**

**Description**

TECHNICAL FIELD

Embodiments of this application relate to the field of information technologies, and more specifically, to a data processing method,a related apparatus,computing device, chip, computer readable medium and computer program product.

**BACKGROUND**

Object-oriented programming (object-oriented programming, OOP) is a programming paradigm based on the concept of objects, and is also an abstract policy for program development. OOP may contain data, characteristics, code, and methods. An object (object) refers to an instance of a class (class). In OOP, the object is used as a basic unit of a program, and the program and data are encapsulated in the object, to improve reusability, flexibility, and scalability of software.

A system does not allocate storage space to a class. After the class is instantiated, the system allocates storage space to an object. In other words, when storing an object, the system allocates corresponding storage space to each object. When the system needs to read a plurality of objects of a same class, the system needs to find the plurality of objects of the same class from different storage space. Consequently, allocating the storage space based on the object may cause low reading efficiency.

Springer Matthias: " Memory Efficient Object-Oriented Programming on GPUs", 16August 2019 teaches optimizing the memory access of object-oriented CPU code (URL:https://arxiv.org/ pdf/1908.05845 [retrieved on 2024-12-11]).
Kretz Matthias: "Extending C++ for Explicit Data Parallel Programming via SIMD Vector Types"" 1 October 2015 teaches vectorized data-parallel processing techniques, such as SIMD, to improve computation efficiency through structured parallelism (URL:https://publikationen.ub.unifrankfurt.de/opus4/frontdoor/deliver/index/docld/38415/file/ Matthias_Kretz_-_ Extending C+ $\pm$_for_Explicit_Data-Parallel_Programmin_via_SIMD_Vector_Types.pdf [retrieved on 2024-12-11]).
Weber Nicolas ET AL: "Auto-Tuning Complex Array Layouts for GPUs",Eurographics Symposium on Parallel Graphics andVisualization, 10 June 2014 teaches optimize GPU memory layouts and kernel selection using auto-tuning strategies to enhance data processing performance.
(URL:https://download.hrz.tu-darmstadtde/pub/FB20/GCC/paper/Weber_2014_EGPGV.pdf [retrieved on 2024-12-11]).

**SUMMARY**

The invention is defined by the appended independent claims. The dependent claims define preferred embodiments.

**BRIEF DESCRIPTION OF DRAWINGS**

FIG. 1 is a schematic diagram of a data storage manner;
FIG. 2 is a schematic flowchart of a data processing method according to an embodiment of this application;
FIG. 3 is a schematic diagram of a manner of storing a data column 1 to a data column 5;
FIG. 4 is a schematic diagram of a manner of storing a compressed data column 1 to a compressed data column 5;
FIG. 5 is a schematic diagram of a character string pool;
FIG. 6 is a schematic diagram of a manner of storing a compressed data column 1 to a compressed data column 5;
FIG. 7 is a schematic flowchart of a data processing method according to an embodiment of this application; and
FIG. 8 is a schematic block diagram of a structure of a computer device according to an embodiment of this application.

**DESCRIPTION OF EMBODIMENTS**

The following describes the technical solutions in embodiments of this application with reference to the accompanying drawings.
To help a person skilled in the art better understand the technical solutions of this application, some terms and technologies related to this application are first described.

## 1. Data locality (data locality)

The data locality may also be referred to as locality. There are two different forms of locality: temporal locality (temporal locality) and spatial locality (spatial locality). In a program with good temporal locality, a location in a memory that has been referenced once is likely to be referenced a plurality of times in near future. In a program with good spatial locality, if a location in a memory has been referenced once, the program is likely to reference a nearby location in the memory in near future. Generally, a program with good data locality is run faster than a program with poor locality. All layers of a modern computer system, from hardware to an operating system and then to an application, are designed using locality. At the hardware layer, a locality principle allows a computer designer to introduce a small and quick memory of a cache to store instructions and a data item that are recently used, to increase a speed of accessing a main memory. At the operating system layer, a locality principle allows the system to use the main memory as a cache for a recently referenced block in virtual address space.

## 2. Object

A hotspot (hotspot) virtual machine is used as an example. In the hotspot virtual machine, a storage layout of the object in memory may be divided into three areas: an object header (object header), instance data (instance data), and alignment padding (padding).

The object header includes a mark field and a class pointer. The mark field (markword) is used to store runtime data of the object, for example, a hash code, a lock status flag, and a lock held by a thread. Lengths of this part of data are respectively 4 bytes and 8 bytes on a 32-bit virtual machine and a 64-bit virtual machine. The class pointer is a pointer that points to class metadata (which is stored in a method area) of the object. The virtual machine uses this pointer to determine a specific class to which an instance represented by the object belongs. The pointer occupies 4 bytes (or 8 bytes on the 64-bit machine).

The instance data is valid information actually stored for the object, and is also various types of field content defined in program code.

The alignment padding acts as a placeholder. An automatic memory management system of the hotspot virtual machine requires that a start address of the object should be an integer multiple of 8 bytes. In other words, a size of the object needs to be an integer multiple of 8 bytes. However, the object header is exactly a multiple (one or two times) of 8 bytes. Therefore, when the instance data of the object is not aligned, the alignment padding is required for completion.

## 3. Integrated development environment (integrated development environment, IDE)

The IDE is an application used to provide a program development environment, and usually includes tools such as a code editor, a compiler, a debugger, and a graphical user interface. The IDE is a development software service suite that integrates a code writing function, an analysis function, a compilation function, a debugging function, and the like.

In the IDE, a code index is a separate and physical storage structure based on which values of all code in a current project and dependent components (code) in a mapping relationship are sorted. The code index indicates a set of values of one or more columns in a data table presenting a mapping relationship and a list of logical pointers correspondingly pointing to data that physically identifies the values in the table. Based on the list of the logical pointers, a specific information set, for example, a code index of all class method sets for a current class, can be quickly found through the IDE.

The code index is a basis for understanding the code in the IDE. All editing-related core capabilities of the IDE depend on the code index, including the following:

1. Code completion: Based on an input of a developer and existing project code, a class name, a method name, a code snippet, and the like are predicted for to-be-completed code in real time, and a suggestion list is provided for the developer. This can reduce entering workload and spelling errors. In addition, the developer does not need to spend a long time memorizing an unfamiliar class name and method name. Finally, development efficiency is improved.
2. Reference lookup: All references of a current symbol in a project are looked up.
3. Error check: A pre-compilation check function is provided to correct abnormal code in a project.
4. Intelligent jump: Quick browsing and jumping to a class, a file, and a symbol (finding a method or a field by using a name) are provided.
5. Syntactic highlighting: A sequence of syntactic special characters such as a keyword in a source file is rendered.
6. Code refactoring: Automatic code optimization functions such as symbol renaming and function extraction are provided.

A conventional code index is stored in a system at a granularity of an object. Generally, one code file corresponds to one code index, one code index is one object, and one object is stored as one file. Therefore, if code indexes of a plurality of code files need to be stored, a plurality of files (referred to as code index files below) are required. The plurality of code index files are in a one-to-one correspondence with the plurality of code files, and each code index file is used to store a code index of a corresponding code file. In addition, in some IDEs, different code index files may be stored in different file directories.

It is assumed that there are the following five objects:

object 1={studentIDno: "3286208", lastname: "Neil", firstname: "Abraham", gender: "male", classyear: "freshman"};
object 2={studentIDno: "3286209", lastname: "Betty", firstname: "Miller", gender: "female", classyear: "freshman"};
object 3={studentIDno: "3286210", lastname: "Sally", firstname: "Wagner", gender: "female", classyear: "freshman"};
object 4={studentIDno: "3286211", lastname: "Joe", firstname: "Brooks", gender: "male", classyear: "freshman"}; and
object 5={studentIDno: "3286212", lastname: "Robin", firstname: "Lee", gender: "female", classyear: "freshman"}.

For ease of description, the foregoing five objects may be represented by using Table 1.

**Table 1**

| Index | Student number | Last name | First name | Gender | Class year |
|-------|----------------|-----------|------------|--------|------------|
| 1 | 3286208 | Neil | Abraham | Male | Freshman |
| 2 | 3286209 | Betty | Miller | Female | Freshman |
| 3 | 3286210 | Sally | Wagner | Female | Freshman |
| 4 | 3286211 | Joe | Brooks | Male | Freshman |
| 5 | 3286212 | Robin | Lee | Female | Freshman |

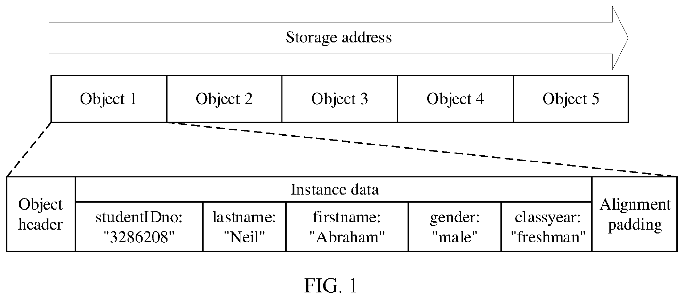

Each of the five objects may include five attributes: a student number (studentIDno), a last name (lastname), a first name (firstname), a gender (gender), and a class year (classyear).
If an object is used as an example to read and store the five objects shown in Table 1, a storage space layout of the five objects may be shown in FIG. 1. As shown in FIG. 1, the object 1 to the object 5 are stored at consecutive storage addresses.

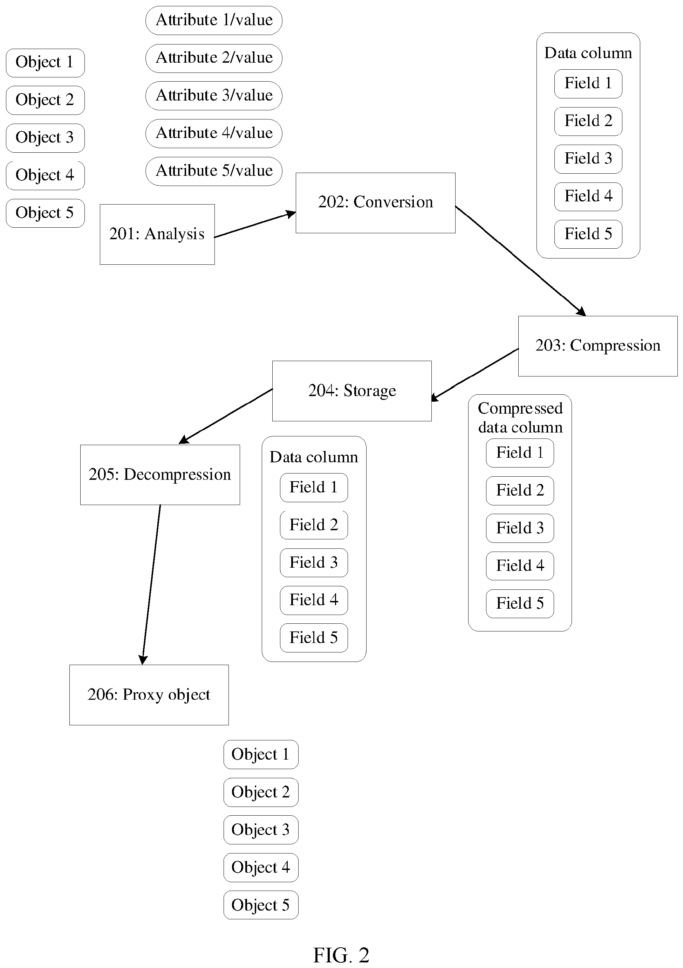

FIG. 2 is a schematic flowchart of a data processing method according to an embodiment of this application.

201: Analyze a to-be-stored object.
202: Perform format conversion.
203: Perform data compression.
204: Store compressed data.
205: Decompress data that needs to be read.
206: Restore data to an object by using a proxy object.

The following separately describes the steps in FIG. 2 with reference to the foregoing five objects.
It may be determined, by analyzing the to-be-stored object 1 to object 5, that the five objects belong to a same class. In other words, the five objects all include a same attribute value. In addition, an attribute value of each attribute of the to-be-stored object may be further determined by analyzing the to-be-stored object.
For example, attribute values of five attributes of the object 1 are respectively 3286208, Neil, Abraham, male (male), and freshman; attribute values of five attributes of the object 2 are respectively 3286209, Betty, Miller, female, and freshman; and so on.
Five data columns may be obtained by performing data conversion on attribute values. The five data columns (data column) are in a one-to-one correspondence with five attribute values, and each data column includes attribute values of a corresponding attribute of the object 1 to the object 5. For ease of description, the five data columns may be respectively referred to as a data column 1 to a data column 5. The data column 1 to the data column 5 include the following content:

data column 1={"3286208", "3286209", "3286210", "3286211", "3286212"};
data column 2={"Neil", "Betty", "Sally", "Joe", "Robin"};
data column 3={"Abraham", "Miller", "Wagner", "Brooks", "Lee"};
data column 4={"male", "female", "female", "male", "female"}; and
data column 5={ "freshman", "freshman", "freshman", "freshman", "freshman"}.

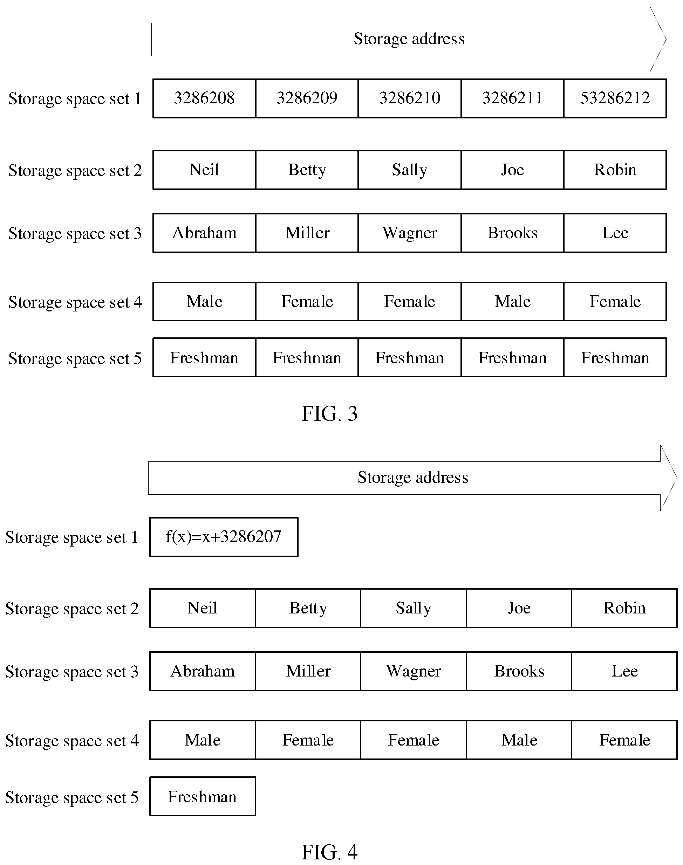

In some embodiments, the five data columns may be directly stored. In other words, in these embodiments, the data column does not need to be compressed (that is, step 203 does not need to be performed). Correspondingly, during reading, the stored data columns may be directly read without decompression (that is, step 205 does not need to be performed). In these embodiments, each of the foregoing five data columns may correspond to one storage space set, each storage space set includes five pieces of storage space with consecutive addresses, and the five pieces of storage space are respectively used to store five pieces of data in a corresponding data column. FIG. 3 shows a manner of storing a data column 1 to a data column 5. Unless otherwise specified, consecutive addresses in embodiments of this application mean consecutive virtual storage addresses.

A storage space set 1 to a storage space set 5 shown in FIG. 3 respectively correspond to the data column 1 to the data column 5. The storage space set 1 is used as an example. The storage space set corresponds to the data column 1, and the storage space set 1 includes five pieces of storage space with consecutive storage addresses. The five pieces of storage space respectively store attribute values of the attribute "student number" of the object 1 to the object 5 (namely, five pieces of data included in the data column 1). For another example, the storage space set 2 corresponds to the data column 2, and the storage space set 2 includes five pieces of consecutive storage space. The five pieces of storage space respectively store attribute values of the attribute "last name" of the object 1 to the object 5 (namely, five pieces of data included in the data column 2). For another example, the storage space set 5 corresponds to the data column 5, and the storage space set 5 includes five pieces of consecutive storage space. The five pieces of storage space respectively store attribute values of the attribute "class year" of the object 1 to the object 5 (namely, five pieces of data included in the data column 3).

In some embodiments, the data column may be further compressed before the data column is stored, and then a compressed data column is stored.

In some embodiments, if values of any two pieces of data included in one data column are the same, the data column may store only one piece of data.

The data column 1 to the data column 5 are used as an example. All data in the data column 5 is "freshman". Therefore, the data column 5 may be compressed. A compressed data column 5 may store only one piece of data.

In some other embodiments, if data included in a data column may be determined based on a preset function, the data column may store the preset function. For example, the data in the data column 1 may be determined based on a linear function $f(x)=x+3286207$, where $x$ is an index value of an object. For example, an index value of the object 1 is 1. In this case, it may be determined, based on the foregoing linear function, that the student number of the object 1 is 3286208. For another example, an index value of the object 5 is 5. In this case, it may be determined, based on the foregoing linear function, that the student number of the object 5 is 3286212. Therefore, the data column 1 may store the linear function.

In some embodiments, some data columns may not need to be compressed. For example, the foregoing compression solution cannot be used for the data column 2, the data column 3, and the data column 4. The data column 2, the data column 3, and the data column 4 may not need to be compressed. In this case, a compressed data column 1 to the compressed data column 5 are respectively:

    data column 1={"f(x)=x+3286207"};
    data column 2={"Neil", "Betty", "Sally", "Joe", "Robin"};
    data column 3={"Abraham", "Miller", "Wagner", "Brooks", "Lee"};
    data column 4={"male", "female", "female", "male", "female"}; and
    data column 5={ "freshman" }.

FIG. 4 shows a manner of storing a compressed data column 1 to a compressed data column 5.

As shown in FIG. 4, after compression, a storage space set 1 corresponding to the data column 1 needs to have only one piece of storage space. A storage space set 5 corresponding to the data column 5 also needs to have only one piece of storage space. A storage space set 2 corresponding to the data column 2, a storage space set 3 corresponding to the data column 3, and a storage space set 4 corresponding to the data column 4 still need to have five pieces of consecutive storage space.

When attribute values of the object 1 to the object 5 need to be read, a storage space set corresponding to an attribute may be determined. If the storage space set corresponding to the attribute is compressed data, the compressed data needs to be decompressed. If the storage space set corresponding to the attribute is uncompressed data, the data in the storage space set may be directly obtained.

For example, it is assumed that full names and class years of the object 1, the object 3, and the object 5 need to be read, data in the 1st storage space, the 3rd storage space, and the 5th storage space in the storage space set 2, data in the 1st storage space, the 3rd storage space, and the 5th storage space in the storage space set 3, and data in storage space in the storage space set 5 may be directly read to obtain the full names and the class years of the object 1, the object 3, and the object 5.

The foregoing technical solution can improve object storage efficiency. For example, in the foregoing technical solution, when data of an object is stored, some redundant information (for example, an object header and alignment padding) does not need to be stored. Therefore, the foregoing technical solution can reduce storage space required for storing the object, and reduce memory usage. In addition, in the foregoing technical solution, data of a plurality of objects of a same class can be stored by using only one file. This reduces a quantity of files that need to be stored.

In addition, in some embodiments, data is compressed, to further reduce storage space required for storing the data, and reduce memory usage.

Further, in some embodiments, the data is stored by using storage space with consecutive addresses, so that the data has good spatial locality.

Reading full names and class years of the object 1 to the object 5 is described by using the storage manner shown in FIG. 1 and the storage manner shown in FIG. 4 as examples.

It is assumed that, in the storage manner shown in FIG. 1, one object occupies 40 bytes (where an object header occupies 8 bytes, instance data occupies 29 bytes, and alignment padding occupies 3 bytes). In the storage manner shown in FIG. 4, one piece of storage space in the storage space set 2 occupies 8 bytes, one piece of storage space in the storage space set 3 occupies 8 bytes, and one piece of storage space in the storage space set 5 occupies 8 bytes.

In a conventional field access manner, a field can be accessed only after full object data is obtained through object reference. However, in the technical solution of this application, object reference and full object data loading can be skipped during field access, and a corresponding value in a data column corresponding to a field can be directly accessed. To be specific, if the full names and the class years of the object 1 to the object 5 need to be read in the conventional field access manner, the three fields "first name", "last name", and "class year" can be accessed to obtain the full names and the class years of the object 1 to the object 5 only after all data of the object 1 to the object 5 are obtained. However, according to the technical solution of this application, the full names and the class years of the object 1 to the object 5 can be obtained by accessing only the storage space sets used to store the three fields "first name", "last name", and "class year".

It is assumed that a quantity of bytes that can be read through one cache read (cache load) is 128. In this case, for the storage manner shown in FIG. 1, if the full names and the class years of the object 1 to the object 5 need to be successfully read, storage space corresponding to the object 1 to the object 5 needs to be separately read to obtain the full names and the class years of the object 1 to the object 5. However, because storage space occupied by each object is 40 bytes, storage space corresponding to the five objects cannot be read at a time. Therefore, at least two cache reads in total are required to obtain the full names and the class years of the object 1 to the object 5.

However, for the storage manner shown in FIG. 4, the full names and the class years of the object 1 to the object 5 can be obtained by reading only the storage space set 2, the storage space set 3, and the storage space set 5. Because the storage space set 2, the storage space set 3, and the storage space set 5 occupy only 88 bytes in total, the full names and the class years of the object 1 to the object 5 can be successfully read through only one cache read. It can be learned that one cache read can be reduced in a case in which there are only five objects.

It may be understood that a larger quantity of objects indicates a larger quantity of reduced cache reads and a larger quantity of reduced cache misses (cache miss). For example, it is assumed that other conditions remain unchanged but a quantity of objects increases from 5 to 100. In this case, if storage is performed in the manner shown in FIG. 1, full names and class years of the 100 objects can be obtained through 32 cache reads. However, if storage is performed in the manner shown in FIG. 4, full names and class years of the 100 objects can be obtained through only 13 cache reads. It can be learned that the technical solution of this application has good data consistency, and can effectively reduce a quantity of cache reads and a quantity of cache misses.

If the technical solution of this application is applied to a scenario in which code indexes are stored, because objects corresponding to all the code indexes belong to a same class, analysis, format conversion, data compression, and storage of compressed data can be performed on all the code indexes according to the solution in embodiments of this application. According to the technical solution of this application, all the code indexes can be stored by using only one file/one location, storage of redundant information can be effectively reduced, and memory usage can be reduced.

For example, it is assumed that one code index requires storage space of 32 bytes (where an object header occupies 8 bytes, instance data occupies 20 bytes, and alignment padding occupies 4 bytes). If a quantity of code indexes that need to be stored is 100, 100 files are required to store the code indexes, and the 100 files occupies storage space of 3200 bytes. In addition, the 100 files may be distributed at different locations for storage. However, if the technical solution of this application is used, only one file is required to store the 100 code indexes, and occupied storage space may be reduced to be less than 2000 bytes.

It may be understood that storing the code indexes by using the technical solution of this application is merely a possible application scenario of the technical solution of this application. The technical solution of this application may also be applied to another scenario in which an object needs to be stored. The application scenario of the technical solution of this application is not limited in embodiments of this application.

It may be understood that, although the attribute values of the objects are not compressed in the storage manner shown in FIG. 3, a plurality of attribute values of a same attribute are stored in consecutive storage space. Therefore, spatial locality is good.

Further, when data stored at a granularity of an object is read, reflection (reflection) needs to be used to restore the data in storage space to an object. This process consumes a specific period of time. However, in the technical solution of this application, reading a group of data stored in storage space is equivalent to directly reading a two-dimensional array, and less time is consumed. Therefore, compared with the conventional technology, in the technical solution of this application, the data of the object can be obtained more quickly.

In some other embodiments, the data column 2, the data column 3, and the data column 4 may also be compressed.

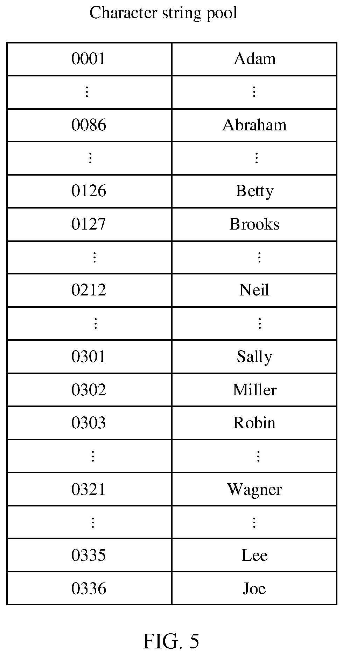

For example, in some embodiments, a system may store a character string pool (string pool). The character string pool may include a plurality of entries, and each entry includes one index value and one name. When a data column includes a name, an index value corresponding to the name may be determined from the character string pool. When the data column including the name is compressed, the index value corresponding to the name may be stored. FIG. 5 is a schematic diagram of a character string pool. The data column 2 and the data column 3 may be compressed based on the character string pool shown in FIG. 5. In addition, the gender may be identified by using 1 bit. For example, a gender with a value 1 indicates male, and a gender with a value 0 indicates female. In this case, a compressed data column 1 to a compressed data column 5 are respectively:

$$\text{data column } 1=\{"f(x)=x+3286207"\};$$

$$\text{data column } 2=\{"0212", "0126", "0301", "0336", "0303"\};$$

$$\text{data column } 3=\{"0086", "0302", "0321", "0127", "0335"\};$$

$$\text{data column } 4=\{"1", "0", "0", "1", "0"\};$$

and

$$\text{data column } 5=\{"freshman"\}.$$

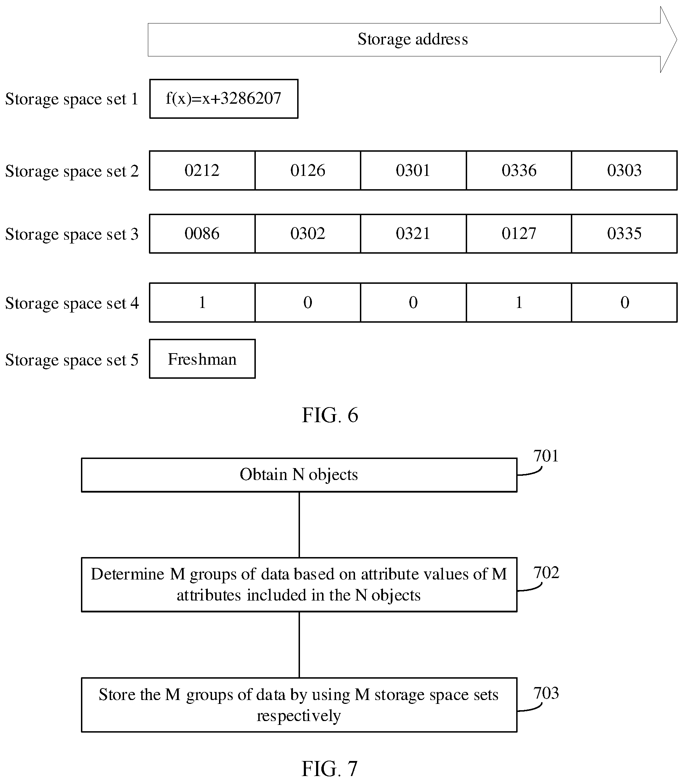

FIG. 6 shows a manner of storing a compressed data column 1 to a compressed data column 5.

As shown in FIG. 6, after compression, a storage space set 1 corresponding to the data column 1 needs to have only one piece of storage space. A storage space set 5 corresponding to the data column 5 also needs to have only one piece of storage space. A storage space set 2 corresponding to the data column 2, a storage space set 3 corresponding to the data column 3, and a storage space set 4 corresponding to the data column 4 still need to have five pieces of consecutive storage space. Although the storage space set 2 corresponding to the data column 2, the storage space set 3 corresponding to the data column 3, and the storage space set 4 corresponding to the data column 4 still need to have five pieces of consecutive storage space, each piece of storage space needs to store only four numbers. One number occupies storage space of 1 byte. Therefore, the storage space set 2 needs 20 bytes in total, the storage space set 3 needs 20 bytes in total, and the storage space set 4 needs 5 bytes in total. Therefore, the solution shown in FIG. 6 can further save storage space.

It may be understood that, when an attribute value is compressed, if a compressed attribute value needs to be read, a decompression solution may be determined based on an attribute corresponding to the attribute value that needs to be read. Then, the attribute value is determined based on data in a data column and the decompression solution. For example, the gender of the object 1 needs to be read. In this case, it may be determined, based on a correspondence between a bit and a gender, that the gender of the object 1 is male. For another example, if the first name of the object 1 needs to be read, it may be determined, based on the character string pool shown in FIG. 5 and an index value 0086 read from the storage space set 4, that the first name of the object 1 is Abraham.

It is further assumed that a quantity of bytes that can be read through one cache read (cache load) is 128. It is further assumed that 100 objects need to be read successfully. In this case, if storage is performed in the manner shown in FIG. 1, full names and class years of the 100 objects can be obtained through 32 cache reads. However, if storage is performed in the manner shown in FIG. 5, full names and class years of the 100 objects can be obtained through only 8 cache reads. In addition, storage performed in the manner shown in FIG. 5 requires storage space less than 1,000 bytes.

In some embodiments, a size of each piece of storage space in a storage space set may be equal to a size of maximum storage space occupied by data indicating an attribute value. For example, a maximum value of an attribute value corresponding to data of an int type is 255. In this case, storage space for storing the attribute value may be only 8 bits, instead of 32 bits.

FIG. 7 is a schematic flowchart of a data processing method according to the invention, and

701: Obtain N objects, where the N objects belong to a same class, each of the N objects includes M attributes, N is a positive integer greater than or equal to 2, and M is a positive integer greater than or equal to 1.

702: Determine M groups of data based on attribute values of the M attributes included in the N objects, where the M groups of data are in a one-to-one correspondence with the M attributes, and each of the M groups of data indicates attribute values of a corresponding attribute of the N objects.

703: Store the M groups of data by using M storage space sets respectively.

the determining M groups of data based on attribute values of the M attributes included in the N objects includes: determining, based on the attribute values of the M attributes included in the N objects, that the M attributes include $M_1$ first-type attributes, where attribute values of first attributes of any two of the N objects are different, the first attribute is any one of the $M_1$ first-type attributes, and $M_1$ is a positive integer greater than or equal to 1 and less than or equal to M; and determining $M_1$ groups of data, where the $M_1$ groups of data are in a one-to-one correspondence with the $M_1$ first-type attributes, N pieces of data included in an $i^{th}$ group of data in the $M_1$ groups of data respectively indicate attribute values of an $i^{th}$ first-type attribute in the $M_1$ first-type attributes of the N objects, and i=1, ..., or $M_1$. The storing the M groups of data by using M storage space sets respectively includes: storing the $M_1$ groups of data by using $M_1$ first storage space sets, where an $i^{th}$ first storage space set in the $M_1$ first storage space sets includes N pieces of consecutive storage space, and the N pieces of consecutive storage space in the $i^{th}$ first storage space set are respectively used to store the N pieces of data included in the $i^{th}$ group of data.

For example, attributes corresponding to the data column 2, the data column 3, and the data column 4 in the foregoing embodiments are first-type attributes.

In some embodiments, each piece of data in the $M_1$ groups of data may be an attribute value of a corresponding attribute. For example, the data may be data in the data column 2, the data column 3, or the data column 4 in the storage manner shown in FIG. 4.

In some other embodiments, each piece of data in the $M_1$ groups of data may be another piece of data that is determined based on an attribute value and that can indicate the attribute value. For example, in the storage manner shown in FIG. 6, the data column 2 and the data column 3 store index values that can indicate names, and the data column 5 stores bits that can indicate genders.

In some embodiments, the determining M groups of data based on attribute values of the M attributes included in the N objects includes: determining, based on the attribute values of the M attributes included in the N objects, that the M attributes include $M_2$ second-type attributes, where attribute values of second attributes of any two of the N objects are the same, the second attribute is any one of the $M_2$ second-type attributes, and $M_2$ is a positive integer greater than or equal to 1 and less than or equal to M; and determining $M_2$ groups of data, where data included in a $j^{th}$ group of data in the $M_2$ groups of data indicates attribute values of a $j^{th}$ second-type attribute in the $M_2$ second-type attributes of the N objects, and j=1, ..., or $M_2$. The storing the M groups of data by using M storage space sets respectively includes: storing the $M_2$ groups of data by using $M_2$ second storage space sets, where storage space included in a $j^{th}$ second storage space set in the $M_2$ second storage space sets is used to store the data included in the $j^{th}$ group of data.

For example, attributes corresponding to the data column 5 in the foregoing embodiments are second-type attributes.

In some embodiments, the determining M groups of data based on attribute values of the M attributes included in the N objects includes: determining, based on the attribute values of the M attributes included in the N objects, that the M attributes include $M_3$ third-type attributes, where a third attribute of each of the N objects can be determined based on a function, the third attribute is any one of the $M_3$ third-type attributes, and $M_3$ is a positive integer greater than or equal to 1 and less than or equal to M; and determining $M_3$ groups of data, where a function included in a $k^{th}$ group of data in the $M_3$ groups of data can determine attribute values of a $k^{th}$ third-type attribute in the $M_3$ third-type attributes of the N objects, and k=1, ..., or $M_3$; and the storing the M groups of data by using M storage space sets respectively includes: storing the $M_3$ groups of data by using $M_3$ third storage space sets, where storage space included in a $k^{th}$ third storage space set in the $M_3$ third storage space sets is used to store the function included in the $k^{th}$ group of data.

For example, attributes corresponding to the data column 1 in the foregoing embodiments are third-type attributes.

It may be understood that, in some embodiments, an attribute type of an object may include only the first-type attribute. In this case, $M_1$=M. Similarly, in some embodiments, the attribute type of the object may include only the second-type attribute or only the third-type attribute. When the attribute type includes only the second-type attribute, $M_2$=M. When the attribute type includes only the third-type attribute, $M_3$=M.

In some other embodiments, attribute types of an object may include the first-type attribute, the second-type attribute, and the third-type attribute. In this case, $M_1+M_2+M_3$=M.

In some other embodiments, attribute types of an object may include any two of the first-type attribute, the second-type attribute, and the third-type attribute. For example, the attribute types of the object may include only the first-type attribute and the second-type attribute. In this case, $M_1+M_2=M$. For another example, the attribute types of the object may include only the first-type attribute and the third-type attribute. In this case, $M_1+M_3=M$. For another example, the attribute types of the object may include only the second-type attribute and the third-type attribute. In this case, $M_2+M_3=M$.

If a group of data determined based on attribute values includes N pieces of data, and the N pieces of data are respectively N attribute values of a corresponding attribute, it may be considered that the attribute values are not compressed. For example, in the storage manner shown in FIG. 3, the data column 1 to the data column 5 are all uncompressed data. For another example, in the storage manner shown in FIG. 4, the data column 2, the data column 3, and the data column 4 are all uncompressed data.

If data included in a group of data determined based on attribute values is not the attribute values of a corresponding attribute, but the attribute values of the corresponding attribute can be determined according to a specific rule, it may be considered that the attribute values are compressed. For example, data in the data column 1 and the data column 5 in FIG. 4 is data obtained after attribute values of the attribute "student number" and the attribute "class year" are compressed. For another example, data in the data column 1 to the data column 5 in FIG. 6 is obtained by compressing attribute values of a corresponding attribute.

It may be understood that the foregoing attribute type and the foregoing compression manner are merely examples for attribute value compression. Based on an actual attribute value, an object may also include more types of attributes, and there may be more compression manners.

In some embodiments, attribute values of different attributes are stored only by using different storage space, and compression is not performed on the attribute values. For example, refer to the storage manner shown in FIG. 3.

In some other embodiments, attribute values of only some types may be compressed. For example, in the storage manner shown in FIG. 4, only the second-type attribute and the third-type attribute are compressed.

In some other embodiments, attribute values of all types may be compressed. For example, in the embodiment shown in FIG. 6, the first-type attribute, the second-type attribute, and the third-type attribute are all compressed.

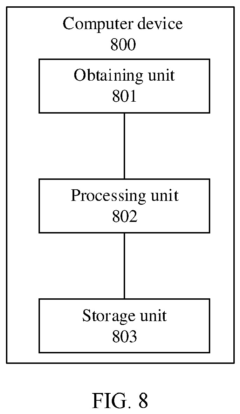

FIG. 8 is a schematic block diagram of a structure of a computer device according to an embodiment of this application. The computer device 800 shown in FIG. 8 includes an obtaining unit 801, a processing unit 802, and a storage unit 803.

The obtaining unit 801 is configured to obtain N objects, where the N objects belong to a same class, and each of the N objects includes M attributes.

The processing unit 802 is configured to determine M groups of data based on attribute values of the M attributes included in the N objects, where the M groups of data are in a one-to-one correspondence with the M attributes, and each of the M groups of data indicates attribute values of a corresponding attribute of the N objects.

The storage unit 803 is configured to store the M groups of data by using M storage space sets respectively.

For specific functions and beneficial effects of the obtaining unit 801, the processing unit 802, and the storage unit 803, refer to the foregoing embodiments. For brevity, details are not described herein again.

In some embodiments, the obtaining unit 801 and the processing unit 802 may be implemented by a processor. The storage unit 803 may be implemented by a memory.

An embodiment of this application further provides a computer device, including a processor and a memory. The processor is configured to be coupled to the memory, and read and execute instructions and/or program code in the memory, to perform the steps in the foregoing method embodiments.

It should be understood that the processor may be a chip. For example, the processor may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), another programmable logic device, a discrete gate or a transistor logic device, a discrete hardware component, or another integrated chip.

In an implementation process, steps in the foregoing methods can be implemented by using a hardware integrated logic circuit in the processor, or by using instructions in a form of software. The steps of the method disclosed with reference to embodiments of this application may be directly performed by a hardware processor, or may be performed by a combination of hardware and software modules in the processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps of the foregoing method in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logic circuit in the processor, or by using instructions in a form of software. The general-purpose processor may be a microprocessor, or the processor may be any conventional processor or the like. The steps of the methods disclosed with reference to embodiments of this application may be directly performed by a hardware decoding processor, or performed by a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps of the foregoing method in combination with hardware of the processor.

It may be understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example and not limitation, many forms of RAMs are available, such as a static random access memory (static RAM, SRAM), a dynamic random access memory (dynamic RAM, DRAM), a synchronous dynamic random access memory (synchronous DRAM, SDRAM), double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory for the system and the method described in this specification aims to include but is not limited to these memories and any memory of another appropriate type.

According to the method provided in embodiments of this application, this application further provides a computer program product. The computer program product includes computer program code. When the computer program code is run on a computer, the computer is enabled to perform the steps in the foregoing embodiments.

According to the method provided in embodiments of this application, this application further provides a computer-readable medium. The computer-readable medium stores program code. When the program code is run on a computer, the computer is enabled to perform the steps in the foregoing embodiments.

According to the method provided in embodiments of this application, an embodiment of this application provides a chip system. The chip system includes a logic circuit. The logic circuit is configured to be coupled to an input/output interface, and transmit data through the input/output interface, to perform the steps in the foregoing embodiments.

A person of ordinary skill in the art may be aware that, in combination with the examples described in embodiments disclosed in this specification, units and algorithm steps may be implemented by electronic hardware or a combination of computer software and electronic hardware. Whether the functions are implemented by hardware or software depends on specific applications and design constraints of the technical solutions. A person skilled in the art may use different methods to implement the described functions for each particular application, but it should not be considered that the implementation goes beyond the scope of this application.

It may be clearly understood by a person skilled in the art that, for convenience and brevity of description, for a specific working process of the foregoing described system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division. In actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces, and indirect couplings or communication connections between apparatuses or units may be implemented in an electrical, mechanical, or another form.

The units described as separate parts may or may not be physically separate, and parts displayed as units may or may not be physical units, may be located in one place, or may be distributed on a plurality of network units. Some or all of the units may be selected according to an actual requirement to achieve the objectives of the solutions in the embodiments.

In addition, function units in embodiments of this application may be integrated into one processing unit, or each unit may exist alone physically, or two or more units may be integrated into one unit.

When the function is implemented in a form of a software function unit and sold or used as an independent product, the function may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

**Claims**

1. A data processing method, comprising:

   obtaining (701) N objects, wherein the N objects belong to a same class, each of the N objects comprises M attributes, N is a positive integer greater than or equal to 2, and M is a positive integer greater than or equal to 1;
   determining (702) M groups of data based on attribute values of the M attributes comprised in the N objects, wherein the M groups of data are in a one-to-one correspondence with the M attributes, and each of the M groups of data indicates attribute values of a corresponding attribute of the N objects; and
   storing (703) the M groups of data by using the M storage space sets respectively
   wherein the determining M groups of data based on attribute values of the M attributes comprised in the N objects comprises:

   determining, based on the attribute values of the M attributes comprised in the N objects, that the M attributes comprise $M_2$ second-type attributes, wherein attribute values of second attributes of any two of the N objects are the same, the second attribute is any one of the $M_2$ second-type attributes, and $M_2$ is a positive integer greater than or equal to 1 and less than or equal to M; and
   determining $M_2$ groups of data, wherein data comprised in a $j^{th}$ group of data in the $M_2$ groups of data indicates attribute values of a $j^{th}$ second-type attribute in the $M_2$ second-type attributes of the N objects, and j=1, ..., or $M_2$; and
   the storing the M groups of data by using the M storage space sets respectively comprises:
   storing the $M_2$ groups of data by using $M_2$ second storage space sets, wherein storage space comprised in a $j^{th}$ second storage space set in the $M_2$ second storage space sets is used to store the data comprised in the $j^{th}$ group of data..

2. The method according to claim 1, wherein the determining M groups of data based on attribute values of the M attributes comprised in the N objects comprises:

   determining, based on the attribute values of the M attributes comprised in the N objects, that the M attributes comprise $M_1$ first-type attributes, wherein attribute values of first attributes of any two of the N objects are different, the first attribute is any one of the $M_1$ first-type attributes, and $M_1$ is a positive integer greater than or equal to 1 and less than or equal to M; and
   determining $M_1$ groups of data, wherein the $M_1$ groups of data are in a one-to-one correspondence with the $M_1$ first-type attributes, N pieces of data comprised in an $i^{th}$ group of data in the $M_1$ groups of data respectively indicate attribute values of an $i^{th}$ first-type attribute in the $M_1$ first-type attributes of the N objects, and i=1, ..., or $M_1$; and
   the storing the M groups of data by using the M storage space sets respectively comprises:
   storing the $M_1$ groups of data by using $M_1$ first storage space sets, wherein an $i^{th}$ first storage space set in the $M_1$ first storage space sets comprises N pieces of consecutive storage space, and the N pieces of consecutive storage space in the $i^{th}$ first storage space set are respectively used to store the N pieces of data comprised in the $i^{th}$ group of data.

3. The method according to any one of claims 1 to 2, wherein the determining M groups of data based on attribute values of the M attributes comprised in the N objects comprises:

   determining, based on the attribute values of the M attributes comprised in the N objects, that the M attributes comprise $M_3$ third-type attributes, wherein a third attribute of each of the N objects can be determined based on a function, the third attribute is any one of the $M_3$ third-type attributes, and $M_3$ is a positive integer greater than or equal to 1 and less than or equal to M; and
   determining $M_3$ groups of data, wherein a function comprised in a $k^{th}$ group of data in the $M_3$ groups of data can determine attribute values of a $k^{th}$ third-type attribute in the $M_3$ third-type attributes of the N objects, and k=1, ..., or $M_3$; and
   the storing the M groups of data by using the M storage space sets respectively comprises:
   storing the $M_3$ groups of data by using $M_3$ third storage space sets, wherein storage space comprised in a $k^{th}$ third storage space set in the $M_3$ third storage space sets is used to store the function comprised in the $k^{th}$ group of data.

4. The method according to any one of claims 1 to 3, wherein a size of each piece of storage space in each of the M storage space sets is equal to a size of maximum storage space occupied by data indicating an attribute value.

5. The method according to any one of claims 1 to 4, wherein the method further comprises:

obtaining a read instruction, wherein the read instruction is used to read attribute values of P attributes of one or more of the N objects, and P is a positive integer greater than or equal to 1 and less than or equal to M;
determining P storage space sets from the M storage space sets, wherein the P storage space sets are in a one-to-one correspondence with the P attributes; and
respectively determining the attribute values of the P attributes of the one or more objects based on data comprised in the P storage space sets.

6. A computer device (800), comprising:

an obtaining unit (801), configured to obtain N objects, wherein the N objects belong to a same class, each of the N objects comprises M attributes, N is a positive integer greater than or equal to 2, and M is a positive integer greater than or equal to 1;
a processing unit (802), configured to determine M groups of data based on attribute values of the M attributes comprised in the N objects, wherein the M groups of data are in a one-to-one correspondence with the M attributes, and each of the M groups of data indicates attribute values of a corresponding attribute of the N objects; and
a storage unit (803), configured to store the M groups of data by using the M storage space sets respectively wherein the processing unit is specifically configured to: determine, based on the attribute values of the M attributes comprised in the N objects, that the M attributes comprise $M_2$ second-type attributes, wherein attribute values of second attributes of any two of the N objects are the same, the second attribute is any one of the $M_2$ second-type attributes, and $M_2$ is a positive integer greater than or equal to 1 and less than or equal to M; and determine $M_2$ groups of data, wherein data comprised in a $j^{th}$ group of data in the $M_2$ groups of data indicates attribute values of a $j^{th}$ second-type attribute in the $M_2$ second-type attributes of the N objects, and j=1, ..., or $M_2$; and
the storage unit is specifically configured to store the $M_2$ groups of data by using $M_2$ second storage space sets, wherein storage space comprised in a $j^{th}$ second storage space set in the $M_2$ second storage space sets is used to store the data comprised in the $j^{th}$ group of data.

7. The computer device according to claim 6, wherein the processing unit is specifically configured to: determine, based on the attribute values of the M attributes comprised in the N objects, that the M attributes comprise $M_1$ first-type attributes, wherein attribute values of first attributes of any two of the N objects are different, the first attribute is any one of the $M_1$ first-type attributes, and $M_1$ is a positive integer greater than or equal to 1 and less than or equal to M; and

determine $M_1$ groups of data, wherein the $M_1$ groups of data are in a one-to-one correspondence with the $M_1$ first-type attributes, N pieces of data comprised in an $i^{th}$ group of data in the $M_1$ groups of data respectively indicate attribute values of an $i^{th}$ first-type attribute in the $M_1$ first-type attributes of the N objects, and i=1, ..., or $M_1$; and
the storage unit is specifically configured to store the $M_1$ groups of data by using $M_1$ first storage space sets, wherein an $i^{th}$ first storage space set in the $M_1$ first storage space sets comprises N pieces of consecutive storage space, and the N pieces of consecutive storage space in the $i^{th}$ first storage space set are respectively used to store the N pieces of data comprised in the $i^{th}$ group of data.

8. The computer device according to any one of claims 6 to 7, wherein the processing unit is specifically configured to: determine, based on the attribute values of the M attributes comprised in the N objects, that the M attributes comprise $M_3$ third-type attributes, wherein a third attribute of each of the N objects can be determined based on a function, the third attribute is any one of the $M_3$ third-type attributes, and $M_3$ is a positive integer greater than or equal to 1 and less than or equal to M; and

determine $M_3$ groups of data, wherein a function comprised in a $k^{th}$ group of data in the $M_3$ groups of data can determine attribute values of a $k^{th}$ third-type attribute in the $M_3$ third-type attributes of the N objects, and k=1, ..., or $M_3$; and
the storage unit is specifically configured to store the $M_3$ groups of data by using $M_3$ third storage space sets, wherein storage space comprised in a $k^{th}$ third storage space set in the $M_3$ third storage space sets is used to store the function comprised in the $k^{th}$ group of data.

9. The computer device according to any one of claims 6 to 8, wherein a size of each piece of storage space in each of the M storage space sets is equal to a size of maximum storage space occupied by data indicating an attribute value.

10. The computer device according to any one of claims 6 to 9, wherein the obtaining unit is further configured to obtain a read instruction, wherein the read instruction is used to read attribute values of P attributes of one or more of the N objects, and P is a positive integer greater than or equal to 1 and less than or equal to M;

> the processing unit is further configured to determine P storage space sets from the M storage space sets, wherein the P storage space sets are in a one-to-one correspondence with the P attributes; and
> the processing unit is further configured to respectively determine the attribute values of the P attributes of the one or more objects based on data comprised in the P storage space sets.

11. A computer-readable medium, wherein the computer-readable medium stores program code, and when the computer program code is run on a computer, the computer is enabled to perform the method according to any one of claims 1 to 5.

12. A computer program product, wherein when the computer program product is run on a computer, the computer is enabled to perform the method according to any one of claims 1 to 5.

**Patentansprüche**

1. Datenverarbeitungsverfahren, umfassend:

> Ermitteln (701) von N Objekten, wobei die N Objekte zu derselben Klasse gehören, jedes der N Objekte M Attribute umfasst, N eine positive ganze Zahl größer oder gleich 2 ist und M eine positive ganze Zahl größer oder gleich 1 ist;
> Bestimmen (702) von M Datengruppen basierend auf Attributwerten der M Attribute, die in den N Objekten enthalten sind, wobei die M Datengruppen in einer Eins-zu-Eins-Entsprechung mit den M Attributen stehen und jede der M Datengruppen Attributwerte eines entsprechenden Attributs der N Objekte angibt; und
> jeweiliges Speichern (703) der M Datengruppen unter Verwendung der M Speicherplatzsätze,
> wobei das Bestimmen von M Datengruppen basierend auf Attributwerten der M Attribute, die in den N Objekten enthalten sind, Folgendes umfasst:

>> Bestimmen basierend auf den Attributwerten der M Attribute, die in den N Objekten enthalten sind, dass die M Attribute $M_2$ Attribute des zweiten Typs umfassen, wobei Attributwerte von zweiten Attributen von zwei beliebigen der N Objekte dieselben sind, das zweite Attribut ein beliebiges der $M_2$ Attribute des zweiten Typs ist und $M_2$ eine positive ganze Zahl größer oder gleich 1 und kleiner oder gleich M ist; und
>> Bestimmen von $M_2$ Datengruppen, wobei Daten, die in einer j-ten Datengruppe in den $M_2$ Datengruppen enthalten sind, Attributwerte eines j-ten Attributs des zweiten Typs in den $M_2$ Attributen des zweiten Typs der N Objekte angeben, und j = 1, ... oder $M_2$; und das jeweilige Speichern der M Datengruppen unter Verwendung der M Speicherplatzsätze Folgendes umfasst:
>> Speichern der $M_2$ Datengruppen unter Verwendung von $M_2$ zweiten Speicherplatzsätzen, wobei ein Speicherplatz, der in einem j-ten zweiten Speicherplatzsatz in den $M_2$ zweiten Speicherplatzsätzen enthalten ist, verwendet wird, um die Daten zu speichern, die in der j-ten Datengruppen enthalten sind.

2. Verfahren nach Anspruch 1, wobei das Bestimmen von M Datengruppen basierend auf Attributwerten der M Attribute, die in den N Objekten enthalten sind, Folgendes umfasst:

> Bestimmen basierend auf den Attributwerten der M Attribute, die in den N Objekten enthalten sind, dass die M Attribute $M_1$ Attribute des ersten Typs umfassen, wobei Attributwerte von ersten Attributen von zwei beliebigen der N Objekte dieselben sind, das erste Attribut ein beliebiges der $M_1$ Attribute des ersten Typs ist und $M_1$ eine positive ganze Zahl größer oder gleich 1 und kleiner oder gleich M ist; und
> Bestimmen von $M_1$ Datengruppen, wobei die $M_1$ Datengruppen in einer Eins-zu-Eins-Entsprechung mit den $M_1$ Attributen des ersten Typs stehen, N Datenstücke, die in einer i-ten Datengruppe in den $M_1$ Datengruppen enthalten sind, jeweils Attributwerte eines i-ten Attributs des ersten Typs in den $M_1$ Attributen des ersten Typs der N Objekte angeben, und i=1, ... oder $M_1$; und
> das jeweilige Speichern der M Datengruppen unter Verwendung der M Speicherplatzsätze Folgendes umfasst:

Speichern der $M_1$ Datengruppen unter Verwendung von $M_1$ ersten Speicherplatzsätzen, wobei ein i-ter erster Speicherplatzsatz in den $M_1$ ersten Speicherplatzsätzen N aufeinanderfolgende Speicherplatzstücke umfasst, und die N aufeinanderfolgende Speicherplatzstücke in dem i-ten ersten Speicherplatzsatz jeweils verwendet werden, um die N Datenstücke zu speichern, die in der i-ten Datengruppen enthalten sind.

3. Verfahren nach einem der Ansprüche 1 bis 2, wobei das Bestimmen von M Datengruppen basierend auf Attributwerten der M Attribute, die in den N Objekten enthalten sind, Folgendes umfasst:

Bestimmen basierend auf den Attributwerten der M Attribute, die in den N Objekten enthalten sind, dass die M Attribute $M_3$ Attribute des dritten Typs umfassen, wobei ein drittes Attribut von jedem der N Objekte basierend auf einer Funktion bestimmt werden kann, das dritte Attribut ein beliebiges der $M_3$ Attribute des dritten Typs ist und $M_3$ eine positive ganze Zahl größer oder gleich 1 und kleiner oder gleich M ist; und
Bestimmen von $M_3$ Datengruppen, wobei eine Funktion, die in einer k-ten Datengruppe in den $M_3$ Datengruppen enthalten ist, Attributwerte eines k-ten Attributs des dritten Typs in den $M_3$ Attributen des dritten Typs der N Objekte bestimmen kann, und k = 1, ... oder $M_3$; und
das Speichern der M Datengruppen unter Verwendung der M Speicherplatzsätze Folgendes umfasst:
Speichern der $M_3$ Datengruppen unter Verwendung von $M_3$ dritten Speicherplatzsätzen, wobei der Speicherplatz, der in einem k-ten dritten Speicherplatzsatz in den $M_3$ dritten Speicherplatzsätzen enthalten ist, verwendet wird, um die Funktion zu speichern, die in der k-ten Datengruppe enthalten ist.

4. Verfahren nach einem der Ansprüche 1 bis 3, wobei eine Größe jedes Speicherplatzstücks in jedem der M Speicherplatzsätze gleich einer Größe des maximalen Speicherplatzes ist, der durch Daten belegt wird, die einen Attributwert angeben.

5. Verfahren nach einem der Ansprüche 1 bis 4, wobei das Verfahren ferner Folgendes umfasst:

Ermitteln einer Leseanweisung, wobei die Leseanweisung verwendet wird, um Attributwerte von P Attributen eines oder mehrerer der N Objekte zu lesen, und P eine positive ganze Zahl größer oder gleich 1 und kleiner oder gleich M ist;
Bestimmen von P Speicherplatzsätzen aus den M Speicherplatzsätzen, wobei die P Speicherplatzsätze in einer Eins-zu-Eins-Entsprechung mit den P Attributen stehen; und
jeweiliges Bestimmen der Attributwerte der P Attribute des einen oder der mehreren Objekte basierend auf Daten, die in den P Speicherplatzsätzen enthalten sind.

6. Computervorrichtung (800), umfassend:

eine Ermittlungseinheit (801), die dazu konfiguriert ist, N Objekte zu ermitteln, wobei die N Objekte zu derselben Klasse gehören, jedes der N Objekte M Attribute umfasst, N eine positive ganze Zahl größer oder gleich 2 ist und M eine positive ganze Zahl größer oder gleich 1 ist;
eine Verarbeitungseinheit (802), die dazu konfiguriert ist, M Datengruppen basierend auf Attributwerten der M Attribute zu bestimmen, die in den N Objekten enthalten sind, wobei die M Datengruppen in einer Eins-zu-Eins-Entsprechung mit den M Attributen stehen und jede der M Datengruppen Attributwerte eines entsprechenden Attributs der N Objekte angibt; und
eine Speichereinheit (803), die dazu konfiguriert ist, die M Datengruppen jeweils unter Verwendung der M Speicherplatzsätze zu speichern,
wobei die Verarbeitungseinheit speziell dazu konfiguriert ist:

basierend auf den Attributwerten der M Attribute, die in den N Objekten enthalten sind, zu bestimmen, dass die M Attribute $M_2$ Attribute des zweiten Typs umfassen, wobei Attributwerte von zweiten Attributen von zwei beliebigen der N Objekte dieselben sind, das zweite Attribut ein beliebiges der $M_2$ Attribute des zweiten Typs ist und $M_2$ eine positive ganze Zahl größer oder gleich 1 und kleiner oder gleich M ist; und
$M_2$ Datengruppen zu bestimmen, wobei Daten, die in einer j-ten Datengruppe in den $M_2$ Datengruppen enthalten sind, Attributwerte eines j-ten Attributs des zweiten Typs in den $M_2$ Attributen des zweiten Typs der N Objekte angeben, und j = 1, ... oder $M_2$; und
die Speichereinheit speziell dazu konfiguriert ist, die $M_2$ Datengruppen unter Verwendung von $M_2$ zweiten Speicherplatzsätzen zu speichern, wobei Speicherplatz, der in einem j-ten zweiten Speicherplatzsatz in den $M_2$ zweiten Speicherplatzsätzen enthalten ist, verwendet wird, um die Daten zu speichern, die in der j-ten Datengruppen enthalten sind.

7. Computervorrichtung nach Anspruch 6, wobei die Verarbeitungseinheit speziell dazu konfiguriert ist: basierend auf den Attributwerten der M Attribute, die in den N Objekten enthalten sind, zu bestimmen, dass die M Attribute $M_1$ Attribute des ersten Typs umfassen, wobei die Attributwerte von ersten Attributen von zwei beliebigen der N Objekte unterschiedlich sind, das erste Attribut ein beliebiges der $M_1$ Attribute des ersten Typs ist und $M_1$ eine positive ganze Zahl größer oder gleich 1 und kleiner oder gleich M ist; und

$M_1$ Datengruppen zu bestimmen, wobei die $M_1$ Datengruppen in einer Eins-zu-Eins-Entsprechung mit den $M_1$ Attributen des ersten Typs stehen, N Datenstücke, die in einer i-ten Datengruppe in den $M_1$ Datengruppen enthalten sind, jeweils Attributwerte eines i-ten Attributs des ersten Typs in den $M_1$ Attributen des ersten Typs der N Objekte angeben, und i=1, ... oder $M_1$; und
die Speichereinheit speziell dazu konfiguriert ist, die $M_1$ Datengruppen unter Verwendung von $M_1$ ersten Speicherplatzsätzen zu speichern, wobei ein i-ter erster Speicherplatzsatz in den $M_1$ ersten Speicherplatzsätzen N aufeinanderfolgende Speicherplatzstücke umfasst, und die N aufeinanderfolgende Speicherplatzstücke in dem i-ten ersten Speicherplatzsatz jeweils verwendet werden, um die N Datenstücke zu speichern, die in der i-ten Datengruppen enthalten sind.

8. Computervorrichtung nach einem der Ansprüche 6 bis 7, wobei die Verarbeitungseinheit speziell dazu konfiguriert ist: basierend auf den Attributwerten der M Attribute, die in den N Objekten enthalten sind, zu bestimmen, dass die M Attribute $M_3$ Attribute des dritten Typs umfassen, wobei ein drittes Attribut von jedem der N Objekte basierend auf einer Funktion bestimmt werden kann, das dritte Attribut ein beliebiges der $M_3$ Attribute des dritten Typs ist und $M_3$ eine positive ganze Zahl größer oder gleich 1 und kleiner oder gleich M ist; und

$M_3$ Datengruppen zu bestimmen, wobei eine Funktion, die in einer k-ten Datengruppe in den $M_3$ Datengruppen enthalten ist, Attributwerte eines k-ten Attributs des dritten Typs in den $M_3$ Attributen des dritten Typs der N Objekte bestimmen kann, und k = 1, ... oder $M_3$; und
die Speichereinheit speziell dazu konfiguriert ist, die $M_3$ Datengruppen unter Verwendung von $M_3$ dritten Speicherplatzsätzen zu speichern, wobei Speicherplatz, der in einem k-ten dritten Speicherplatzsatz in den $M_3$ dritten Speicherplatzsätzen enthalten ist, verwendet wird, um die Funktion zu speichern, die in der k-ten Datengruppe enthalten ist.

9. Computervorrichtung nach einem der Ansprüche 6 bis 8, wobei eine Größe jedes Speicherplatzstücks in jedem der M Speicherplatzsätze gleich einer Größe des maximalen Speicherplatzes ist, der durch Daten belegt wird, die einen Attributwert angeben.

10. Computervorrichtung nach einem der Ansprüche 6 bis 9, wobei die Ermittlungseinheit ferner dazu konfiguriert ist, eine Leseanweisung zu ermitteln, wobei die Leseanweisung verwendet wird, um Attributwerte von P Attributen eines oder mehrerer der N Objekte zu lesen, und P eine positive ganze Zahl größer oder gleich 1 und kleiner oder gleich M ist;

die Verarbeitungseinheit ferner dazu konfiguriert ist, P Speicherplatzsätze aus den M Speicherplatzsätzen zu bestimmen, wobei die P Speicherplatzsätze in einer Eins-zu-Eins-Entsprechung mit den P Attributen stehen; und
die Verarbeitungseinheit ferner dazu konfiguriert ist, jeweils die Attributwerte der P Attribute des einen oder der mehreren Objekte basierend auf Daten zu bestimmen, die in den P Speicherplatzsätzen enthalten sind.

11. Computerlesbares Medium, wobei das computerlesbare Medium einen Programmcode speichert und, wenn der Computerprogrammcode auf einem Computer ausgeführt wird, der Computer in die Lage versetzt wird, das Verfahren nach einem der Ansprüche 1 bis 5 durchzuführen.

12. Computerprogrammprodukt, wobei, wenn das Computerprogrammprodukt auf einem Computer ausgeführt wird, der Computer in die Lage versetzt wird, das Verfahren nach einem der Ansprüche 1 bis 5 durchzuführen.

**Revendications**

1. Procédé de traitement de données, comprenant :

l'obtention (701) de N objets, dans lequel les N objets appartiennent à une même classe, chacun des N objets comprend M attributs, N est un entier positif supérieur ou égal à 2, et M est un entier positif supérieur ou égal à 1 ;
la détermination (702) de M groupes de données sur la base de valeurs d'attributs des M attributs compris dans les N objets, dans lequel les M groupes de données sont en correspondance un à un avec les M attributs, et chacun des M groupes de données indique les valeurs d'attributs d'un attribut correspondant des N objets ; et le stockage (703) des M groupes de données en utilisant respectivement les M ensembles d'espace de stockage dans lequel la détermination des M groupes de données sur la base de valeurs d'attributs des M attributs compris dans les N objets comprend :

la détermination, sur la base des valeurs d'attributs des M attributs compris dans les N objets, que les M attributs comprennent $M_2$ attributs de deuxième type, dans lequel les valeurs d'attributs des deuxièmes attributs de deux quelconques des N objets sont les mêmes, le deuxième attribut est l'un quelconque des $M_2$ attributs de deuxième type, et $M_2$ est un entier positif supérieur ou égal à 1 et inférieur ou égal à M ; et la détermination de $M_2$ groupes de données, dans lequel les données comprises dans un $j^{ème}$ groupe de données dans les $M_2$ groupes de données indiquent les valeurs d'attribut d'un $j^{ème}$ attribut de deuxième type dans les $M_2$ attributs de deuxième type des N objets, et j=1, ..., ou $M_2$ ; et le stockage des M groupes de données en utilisant respectivement les M ensembles d'espace de stockage comprend :
le stockage des $M_2$ groupes de données en utilisant $M_2$ deuxièmes ensembles d'espace de stockage, dans lequel l'espace de stockage compris dans un $j^{ème}$ deuxième ensemble d'espace de stockage dans les $M_2$ deuxièmes ensembles d'espace de stockage est utilisé pour stocker les données comprises dans le $j^{ème}$ groupe de données.

2. Procédé selon la revendication 1, dans lequel la détermination de M groupes de données sur la base de valeurs d'attributs des M attributs compris dans les N objets comprend :

la détermination, sur la base des valeurs d'attributs des M attributs compris dans les N objets, que les M attributs comprennent $M_1$ attributs de premier type, dans lequel les valeurs d'attributs des premiers attributs de deux quelconques des N objets sont différentes, le premier attribut est l'un quelconque des $M_1$ attributs de premier type, et $M_1$ est un entier positif supérieur ou égal à 1 et inférieur ou égal à M ; et la détermination de $M_1$ groupes de données, dans lequel les $M_1$ groupes de données sont en correspondance un à un avec les $M_1$ attributs de premier type, les N éléments de données compris dans un $i^{ème}$ groupe de données dans les $M_1$ groupes de données indiquent respectivement les valeurs d'attribut d'un $i^{ème}$ attribut de premier type dans les $M_1$ attributs de premier type des N objets, et i=1, ..., ou $M_1$ ; et le stockage des M groupes de données en utilisant respectivement les M ensembles d'espace de stockage comprend :
le stockage des $M_1$ groupes de données en utilisant $M_1$ premiers ensembles d'espace de stockage, dans lequel un $i^{ème}$ premier ensemble d'espace de stockage dans les $M_1$ premiers ensembles d'espace de stockage comprend N éléments d'espace de stockage consécutifs, et les N éléments d'espace de stockage consécutifs dans le $i^{ème}$ premier ensemble d'espace de stockage sont respectivement utilisés pour stocker les N éléments de données compris dans le $i^{ème}$ groupe de données.

3. Procédé selon l'une quelconque des revendication 1 et 2, dans lequel la détermination de M groupes de données sur la base de valeurs d'attributs des M attributs compris dans les N objets comprend :

la détermination, sur la base des valeurs d'attributs des M attributs compris dans les N objets, que les M attributs comprennent $M_3$ attributs de troisième type, dans lequel un troisième attribut de chacun des N objets peut être déterminé sur la base d'une fonction, le troisième attribut est l'un quelconque des $M_3$ attributs de troisième type, et $M_3$ est un entier positif supérieur ou égal à 1 et inférieur ou égal à M ; et la détermination de $M_3$ groupes de données, dans lequel une fonction comprise dans un $k^{ème}$ groupe de données dans les $M_3$ groupes de données peut déterminer les valeurs d'attribut d'un $k^{ème}$ attribut de troisième type dans les $M_3$ attributs de troisième type des N objets, et k=1, ..., ou $M_3$ ; et le stockage des M groupes de données en utilisant respectivement les M ensembles d'espace de stockage comprend :
le stockage des $M_3$ groupes de données en utilisant $M_3$ troisièmes ensembles d'espace de stockage, dans lequel l'espace de stockage compris dans un $k^{ème}$ troisième ensemble d'espace de stockage dans les $M_3$ troisièmes ensembles d'espace de stockage est utilisé pour stocker la fonction comprise dans le $k^{ème}$ groupe de données.

4. Procédé selon l'une quelconque des revendications 1 à 3, dans lequel une taille de chaque élément d'espace de stockage dans chacun des M ensembles d'espace de stockage est égale à une taille d'espace de stockage maximal occupé par des données indiquant une valeur d'attribut.

5. Procédé selon l'une quelconque des revendications 1 à 4, dans lequel le procédé comprend également :

l'obtention d'une instruction de lecture, dans lequel l'instruction de lecture est utilisée pour lire les valeurs d'attributs de P attributs de l'un ou plusieurs des N objets, et P est un entier positif supérieur ou égal à 1 et inférieur ou égal à M ;
la détermination des P ensembles d'espace de stockage à partir des M ensembles d'espace de stockage, dans lequel les P ensembles d'espace de stockage sont en correspondance un à un avec les P attributs ; et
la détermination respectivement des valeurs d'attributs des P attributs des un ou plusieurs objets sur la base de données comprises dans les P ensembles d'espace de stockage.

6. Dispositif informatique (800), comprenant :

une unité d'obtention (801) configurée pour obtenir N objets, dans lequel les N objets appartiennent à une même classe, chacun des N objets comprend M attributs, N est un entier positif supérieur ou égal à 2, et M est un entier positif supérieur ou égal à 1 ;
une unité de traitement (802), configurée pour déterminer M groupes de données sur la base de valeurs d'attributs des M attributs compris dans les N objets, dans lequel les M groupes de données sont en correspondance un à un avec les M attributs, et chacun des M groupes de données indique les valeurs d'attributs d'un attribut correspondant des N objets ; et
une unité de stockage (803), configurée pour stocker les M groupes de données en utilisant respectivement les M ensembles d'espace de stockage
dans lequel l'unité de traitement est spécifiquement configurée pour : déterminer, sur la base des valeurs d'attributs des M attributs compris dans les N objets, que les M attributs comprennent $M_2$ attributs de deuxième type, dans lequel les valeurs d'attributs des deuxièmes attributs de deux quelconques des N objets sont les mêmes, le deuxième attribut est l'un quelconque des $M_2$ attributs de deuxième type, et $M_2$ est un entier positif supérieur ou égal à 1 et inférieur ou égal à M ; et
déterminer $M_2$ groupes de données, dans lequel les données comprises dans un $j^{\text{ème}}$ groupe de données dans les $M_2$ groupes de données indiquent les valeurs d'attribut d'un $j^{\text{ème}}$ attribut de deuxième type dans les $M_2$ attributs de deuxième type des N objets, et j=1, ..., ou $M_2$ ; et
l'unité de stockage est spécifiquement configurée pour stocker les $M_2$ groupes de données en utilisant $M_2$ deuxièmes ensembles d'espace de stockage, dans lequel l'espace de stockage compris dans un $j^{\text{ème}}$ deuxième ensemble d'espace de stockage dans les $M_2$ deuxièmes ensembles d'espace de stockage est utilisé pour stocker les données comprises dans le $j^{\text{ème}}$ groupe de données.

7. Dispositif informatique selon la revendication 6, dans lequel l'unité de traitement est spécifiquement configurée pour :

déterminer, sur la base des valeurs d'attributs des M attributs compris dans les N objets, que les M attributs comprennent $M_1$ attributs de premier type, dans lequel les valeurs d'attributs des premiers attributs de deux quelconques des N objets sont différentes, le premier attribut est l'un quelconque des $M_1$ attributs de premier type, et $M_1$ est un entier positif supérieur ou égal à 1 et inférieur ou égal à M ; et
déterminer $M_1$ groupes de données, dans lequel les $M_1$ groupes de données sont en correspondance un à un avec les $M_1$ attributs de premier type, les N éléments de données compris dans un $i^{\text{ème}}$ groupe de données dans les $M_1$ groupes de données indiquent respectivement les valeurs d'attribut d'un $i^{\text{ème}}$ attribut de premier type dans les $M_1$ attributs de premier type des N objets, et i=1, ..., ou $M_1$ ; et
l'unité de stockage est spécifiquement configurée pour stocker les $M_1$ groupes de données en utilisant $M_1$ premiers ensembles d'espace de stockage, dans lequel un $i^{\text{ème}}$ premier ensemble d'espace de stockage dans les $M_1$ premiers ensembles d'espace de stockage comprend N éléments d'espace de stockage consécutifs, et les N éléments d'espace de stockage consécutifs dans le $i^{\text{ème}}$ premier ensemble d'espace de stockage sont respectivement utilisés pour stocker les N éléments de données compris dans le $i^{\text{ème}}$ groupe de données.

8. Dispositif informatique selon l'une quelconque des revendications 6 et 7, dans lequel l'unité de traitement est spécifiquement configurée pour : déterminer, sur la base des valeurs d'attributs des M attributs compris dans les N objets, que les M attributs comprennent $M_3$ attributs de troisième type, dans lequel un troisième attribut de chacun des N objets peut être déterminé sur la base d'une fonction, le troisième attribut est l'un quelconque des $M_3$ attributs de troisième type, et $M_3$ est un entier positif supérieur ou égal à 1 et inférieur ou égal à M ; et

déterminer $M_3$ groupes de données, dans lequel une fonction comprise dans un $k^{\text{ème}}$ groupe de données dans les $M_3$ groupes de données peut déterminer les valeurs d'attribut d'un $k^{\text{ème}}$ attribut de troisième type dans les $M_3$

attributs de troisième type des N objets, et k=1, ..., ou $M_3$ ; et

l'unité de stockage est spécifiquement configurée pour stocker les $M_3$ groupes de données en utilisant $M_3$ troisièmes ensembles d'espace de stockage, dans lequel l'espace de stockage compris dans un $k^{ème}$ troisième ensemble d'espace de stockage dans les $M_3$ troisièmes ensembles d'espace de stockage est utilisé pour stocker la fonction comprise dans le $k^{ème}$ groupe de données.

9. Dispositif informatique selon l'une quelconque des revendications 6 à 8, dans lequel une taille de chaque élément d'espace de stockage dans chacun des M ensembles d'espace de stockage est égale à une taille d'espace de stockage maximal occupé par des données indiquant une valeur d'attribut.

10. Dispositif informatique selon l'une quelconque des revendications 6 à 9, dans lequel l'unité d'obtention est également configurée pour obtenir une instruction de lecture, dans lequel l'instruction de lecture est utilisée pour lire les valeurs d'attributs de P attributs de l'un ou plusieurs des N objets, et P est un entier positif supérieur ou égal à 1 et inférieur ou égal à M ;

l'unité de traitement est également configurée pour déterminer P ensembles d'espace de stockage à partir des M ensembles d'espace de stockage, dans lequel les P ensembles d'espace de stockage sont en correspondance un à un avec les P attributs ; et

l'unité de traitement est également configurée pour déterminer respectivement les valeurs d'attribut des P attributs des un ou plusieurs objets sur la base de données comprises dans les P ensembles d'espace de stockage.

11. Support lisible par ordinateur, dans lequel le support lisible par ordinateur stocke un code de programme, et lorsque le code de programme est exécuté sur un ordinateur, l'ordinateur est activé pour réaliser le procédé selon l'une quelconque des revendications 1 à 5.

12. Produit de programme informatique, dans lequel lorsque le produit de programme informatique est exécuté sur un ordinateur, l'ordinateur est activé pour réaliser le procédé selon l'une quelconque des revendications 1 à 5.

Storage address

| Object 1 | Object 2 | Object 3 | Object 4 | Object 5 |
|----------|----------|----------|----------|----------|

| Object header | Instance data | | | | | Alignment padding |
|---------------|---------------|---------------|---------------------|----------------|-----------------------|-------------------|
|               | studentIDno: "3286208" | lastname: "Neil" | firstname: "Abraham" | gender: "male" | classyear: "freshman" |                   |

FIG. 1

Attribute 1/value

Object 1

Attribute 2/value

Object 2

Attribute 3/value

Object 3

Attribute 4/value

Object 4

Attribute 5/value

Object 5

201: Analysis → 202: Conversion

Data column
Field 1
Field 2
Field 3
Field 4
Field 5

203: Compression

204: Storage

Compressed data column
Field 1
Field 2
Field 3
Field 4
Field 5

205: Decompression

Data column
Field 1
Field 2
Field 3
Field 4
Field 5

206: Proxy object

Object 1

Object 2

Object 3

Object 4

Object 5

FIG. 2

Storage address

| Storage space set 1 | 3286208 | 3286209 | 3286210 | 3286211 | 53286212 |
|---|---|---|---|---|---|

| Storage space set 2 | Neil | Betty | Sally | Joe | Robin |
|---|---|---|---|---|---|

| Storage space set 3 | Abraham | Miller | Wagner | Brooks | Lee |
|---|---|---|---|---|---|

| Storage space set 4 | Male | Female | Female | Male | Female |
|---|---|---|---|---|---|

| Storage space set 5 | Freshman | Freshman | Freshman | Freshman | Freshman |
|---|---|---|---|---|---|

FIG. 3

Storage address

| Storage space set 1 | f(x)=x+3286207 |
|---|---|

| Storage space set 2 | Neil | Betty | Sally | Joe | Robin |
|---|---|---|---|---|---|

| Storage space set 3 | Abraham | Miller | Wagner | Brooks | Lee |
|---|---|---|---|---|---|

| Storage space set 4 | Male | Female | Female | Male | Female |
|---|---|---|---|---|---|

| Storage space set 5 | Freshman |
|---|---|

FIG. 4

Character string pool

| | |
|---|---|
| 0001 | Adam |
| ⋮ | ⋮ |
| 0086 | Abraham |
| ⋮ | ⋮ |
| 0126 | Betty |
| 0127 | Brooks |
| ⋮ | ⋮ |
| 0212 | Neil |
| ⋮ | ⋮ |
| 0301 | Sally |
| 0302 | Miller |
| 0303 | Robin |
| ⋮ | ⋮ |
| 0321 | Wagner |
| ⋮ | ⋮ |
| 0335 | Lee |
| 0336 | Joe |

FIG. 5

| | | Storage address |  |  |  |
|---|---|---|---|---|---|

Storage space set 1

| f(x)=x+3286207 |
|---|

Storage space set 2

| 0212 | 0126 | 0301 | 0336 | 0303 |
|---|---|---|---|---|

Storage space set 3

| 0086 | 0302 | 0321 | 0127 | 0335 |
|---|---|---|---|---|

Storage space set 4

| 1 | 0 | 0 | 1 | 0 |
|---|---|---|---|---|

Storage space set 5

| Freshman |
|---|

FIG. 6

| Obtain N objects | 701 |
|---|---|

| Determine M groups of data based on attribute values of M attributes included in the N objects | 702 |
|---|---|

| Store the M groups of data by using M storage space sets respectively | 703 |
|---|---|

FIG. 7

```
┌─────────────────────────────────┐
│      Computer device            │
│           800                   │
│   ┌─────────────────────────┐   │
│   │    Obtaining unit       │   │
│   │        801              │   │
│   └─────────────────────────┘   │
│                                 │
│                                 │
│   ┌─────────────────────────┐   │
│   │   Processing unit       │   │
│   │        802              │   │
│   └─────────────────────────┘   │
│                                 │
│                                 │
│   ┌─────────────────────────┐   │
│   │    Storage unit         │   │
│   │        803              │   │
│   └─────────────────────────┘   │
└─────────────────────────────────┘
```

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SPRINGER MATTHIAS**. *Memory Efficient Object-Oriented Programming on GPUs*, 16 August 2019, https://arxiv.org/ pdf/1908.05845
- **KRETZ MATTHIAS**. *Extending C++ for Explicit Data Parallel Programming via SIMD Vector Types*, 01 October 2015, https://publikationen.ub.unifrankfurt. de/opus4/frontdoor/deliver/index/docld/38415/file/-Matthias_Kretz_-_ Extending C+ ±_for_Explicit_Data-Parallel_Programmin_via_SIMD_Vector_Types. pdf

- **WEBER NICOLAS et al.** Auto-Tuning Complex Array Layouts for GPUs. *Eurographics Symposium on Parallel Graphics andVisualization*, 10 June 2014, https://download.hrz.tu-darmstadtde/-pub/FB20/GCC/paper/Weber_2014_EGPGV.pdf